# EUROPEAN PATENT APPLICATION

(11) **EP 1 688 627 A1**
(43) Date of publication of application: **09.08.2006**
(21) Application number: 04773731.7
(22) Date of filing: 06.10.2004
(51) Int. Cl.: F16B 15/08

(54) **CONNECTED STAPLE**

(30) Priority: 07.10.2003 JP 2003348084
(71) Applicant: MAX CO., LTD., Chuo-ku, Tokyo 103-8502 (JP)
(72) Inventor: SATO, Hiroshi c/o MAX Co., Ltd., Chuo-ku, Tokyo 103-8502 (JP)
(74) Representative: Turi, Michael
(86) International application number: PCT/JP2004/015100
(87) International publication number: WO 2005/035997

(57) **Abstract**

A number of staple members 2 are connected separably by connecting means in a film-like shape at least from one face side of the staple member 2 to constitute a connected staple.

The connecting means in the film-like shape is structured by a tearable film 10 comprising a porous film 11 comprising any of polymer films of polyester, nylon, or oriented polypropylene formed with through holes 12 or unpenetrated holes having an average opening diameter of 0.5 through 100 µm by a density equal to or larger than 1000 holes/cm² over an entire face thereof and a thermally melting polymer film 13 laminated on one face of the polymer film 11.

## Description

### Technical Field:

The present invention relates to a staple for binding a plurality of sheets of paper to be bound in which the staple is charged at inside of a manual or an electric stapler and struck out from the stapler to the sheets to be bound, and the present invention relates to a connected staple structured by connecting staple members to facilitate to be charged into the stapler.

### Background Art:

There is known an electric stapler that is built-in a copier and binds copied sheets at respective book forms. According to an electric stapler of this kind, in order to enable to charge a large amount of staples to reduce a number of times of replenishing staples, there is frequently a case in which a connected staple is formed by connecting staple members in a straight shape before being formed into a C-shape in a state of being aligned in parallel and the connected staple are wound in a coil-like shape and charged to be used in the electric stapler. Further, both end portions of the staple member are folded to bend in a vertical direction to form into the staple in the C-shape by a forming mechanism provided in the electric stapler, and the staple formed into the C-shape is struck out to the sheets to be bound by a driver mechanism.

In a background art, in order to connect a number of formed staple members or unformed staple members, a connected staple is formed by an adhering force of an adhering agent by filling the adhering agent among the staple members contiguous to each other. In a connected staple structured by winding unformed staple members in a roll-like shape, the staple members are connected by pasting a long film made of a synthetic resin along a direction of connecting the staple members aligned in parallel in order to promote flexibilityof connected portions. The film is thin such that when a front staple formed in the C-shape is struck out, the front staple can be cut off from succeeding connected staple by a small force.

In the case of the connected staple of the background art, when the front staple is separated from the connected staple by a driver mechanism, the film is pulled to be broken, however, at this occasion, a broken piece of the film is extended to be extruded to one side or both sides from a width of the staple. After binding the staple, the broken holes/ is extruded from between a crown portion of the staple and the sheets to be bound to bring about a drawback that an outlook thereof is deteriorated.

In order to resolve the problem of the background art, JP-A-10-009235 proposes a connected staple in which a film of a synthetic resin having an orientation at least in one axis direction is adhered on the staple members such that a direction of aligning staple members aligned in parallel and a direction of aligning the film coincide with each other, to thereby facilitate to break the film between the contiguous staple members in a direction orthogonal to the direction of connecting staples.

However, in fabricating the above-described connected staple, there is needed a film in a tape-like shape having the orientation in the width direction of the connected staple and a length in correspondence with a length of connecting the staples, in fabricating the long film, there is needed an apparatus having a width in correspondence with a length of the film, a large sum of capital investment is needed, fabrication cost is increased, thereby, stable supply at low cost may become difficult. Therefore, there poses a problem that the fabrication cost of the connecting staples is increased or the staples cannot be supplied stably.

### Disclosure of the Invention

It is a problem of the invention to resolve the problem in the background arts and provide a connected staple connected by a film facilitated to fabricate and easily obtainable, facilitating to separate a staple member from the connected staple and improving an outlook of the staple subjected to staple binding without producing extrusion of a broken piece of the film from the separated staple member.

The invention is characterized by a connected staple structured by aligning a number of staple members for binding a plurality of sheets to be bound in parallel with each other and connecting separably the staple members by connecting means in a film-like shape at least from one face side of the staple member, wherein the connecting means in the film-like shape is structured by a tearable film structured by laminating a thermally melting polymer film on one face of a porous film comprising any of polymer films of polyester, nylon or oriented polypropylene formed with through holes or unpenetrated holes having an average opening diameter of 0.5 through 100 µm at a density equal to or larger than 1000 holes/cm² over an entire face thereof.

Further, the invention may be structured by the connected staple structured by aligning a number of staple members for binding a plurality of sheets to be bound in parallel with each other and separably connected by connecting means in a film-like shape at least from one face side of the staple member, wherein the connecting means in the film-like shape is structured by a tearable film structured by forming a laminated film by laminating a thermally melting polymer film on one face of a polymer film selected from the group consisting of polyester, nylon and oriented polypropylene, wherein unpenetrated holes having an average opening diameter of 0.5 through 100 µm are formed by a density equal to or larger than 1000 holes/cm² over an entire face thereof from a side of the polymer film of the laminated film to the thermally melting polymer film.

According to the connected staple of the invention, the staple members are connected by way of the tearable film constituting a base by the porous film formed with the through hole or the unpenetrated holes having the average opening diameter of 0.5 through 100 µm by the density equal to or larger than 1000 holes/cm² over the entire face and therefore, strength of connection becomes larger than that connected only by the adhering agent and the connected staple canbe wound in a coil-like shape. Further, the connecting film is formed by the tearable film and therefore, the staple members can easily be separated along the direction of arranging the staple members, a large power is not needed for separating the staple member from the connected staple, and a mechanism of striking the staple is not large-sized. Further, abrokenpiece of the filmnot extruded from both sides of the staple and an outlook in binding by the staple can be improved.

Further, when the tearable film is structured by forming a laminated film by laminating a thermally laminating polymer film on one face of a polymer film and forming unpenetrated holes having an average opening diameter of 0.5 through 100 µm by a density equal to or larger than 1000 holes/cm² over an entire face thereof from a side of the polymer film of the laminated film to the thermally melting polymer film, the unpenetratedhole is formed also at the thermallymeltingpolymer film particularly having a property of being difficult to be broken in any direction and therefore, tearable performance of the tearable film can significantly be promoted, when the front staple is separated from the succeeding portion of the connected staple, the tearable film can extremely easily be pulled to be broken in a direction in parallel with the staple member between the contiguous staple members.

Further, there may be constructed a constitution in which the connected staple are a connected staple structured by connecting a number of unformed staple members in a straight shape, wherein at least the film is adhered to a center portion of the staple which does not constitute a leg thereof at least after forming the staple of the unformed staple member.

The film is adhered to the center portion which does not constitute the leg at least after forming the staple of the unformed staple member and therefore, in binding the staple, the film is not pasted to end portions folded from the both end sides of the staple and therefore, there is not a concern that the film comes out by being rubbed by the sheets to be bound and therefore, an excellent outlook can be ensured. Further, by forming the staple such that the film pasted to the staple member is arranged on an inner side face of a top portion of the staple formed in the C-shape, the film can be made to be further inconspicuous by being pinched between the top portion and the sheet to be bound.

Further, by inserting the polymer film selected from the group consisting of polyester, nylon and oriented polypropylene to between a pair of rollers structured by a roller formed with a diamond particle at a surface thereof and a roller formed with urethane rubber at a surface thereof by a plurality of times by changing an inserting direction, the porous film formed with the through hole or the unpenetrated hole may be formed.

Further, by inserting the laminated film laminated with the thermally melting polymer film at one face of the polymer film selected from the group consisting of polyester, nylon and oriented polypropylene between a pair of rollers structured by a roller formed with a diamond particle at a surface thereof and a roller formed with urethane rubber at a surface thereof by a plurality of times by changing an inserting direction, the unpenetrated hole may be formed on a side of the polymer film of the laminated film.

The through hole or the unpenetrated hole is formed by inserting the film between the pair of rollers structured by the roller formed with the diamond particle at the surface and the roller formed with urethane rubber at the surface by a plurality of times by changing the inserting direction and therefore, breakage faces of the connected film formed on the both sides of the staple can further finely be formed to be clean, the outlook is significantly promoted and an external force of breaking the film is reduced and therefore, also a force of driving the mechanism of striking the staple is reduced small-sized and the light-weighted formation of the stapler can be achieved.

The invention achieves the object of providing the connected staple facilitating to separate the staple member from the connected staple and preventing the broken piece of the film from being extruded from the separated staple member by constituting the connecting means in the film-like shape for connecting the staple members by the tearable film structured by laminating the thermally melting polymer film to one face of the porous film comprising polyester, nylon or oriented polypropylene formed with through holes or unpenetrated holes having the average opening diameter of 0.5 through 100 µm by the density equal to or larger than 1000 holes/cm² over the entire face.

### Brief description of the drawings:

Fig.1 is a perspective view showing connected staple according to a first embodiment.
Fig.2 is a perspective view showing a state of forming and striking out a staple member at a front portion of connected staple the same as those of Fig.1.
Fig.3 is a sectional view showing a state of connecting staple members of connected staple the same as those of Fig.1.
Fig.4A and Fig.4B are sectional views showing a procedure of fabricating a tearable film.
Fig.5 is a sectional view of an essential portion of a roller mechanism for fabricating a porous film.
Fig.6 is a perspective view showing a formed staple separated from connected staple.
Fig.7 is a sectional view showing a staple in a state subjected to staple binding.
Fig. 8 is a sectional view showing a tearable film according to a second embodiment.

Further, in notations of the drawings, numeral 1 designates connected staple, numeral 2 designates a staple member, numeral 10 designates a tearable film, numeral 11 designates a porous film, numeral 12 designates a through hole and numeral 13 designates a thermally melting polymer film (LLDPE film).

### Best Mode for Carrying Out the Invention:

### <First embodiment>

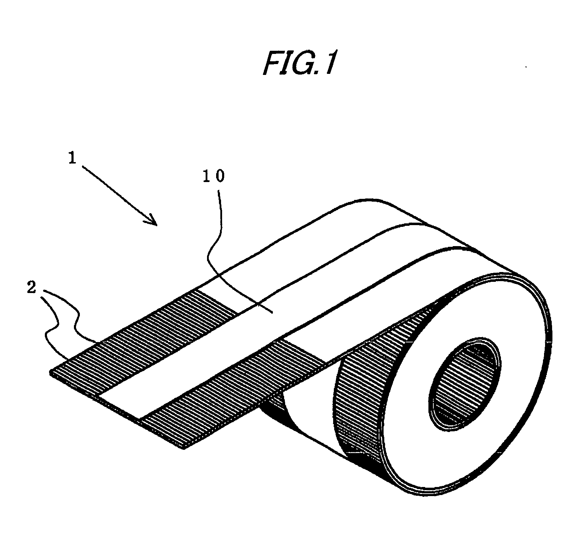

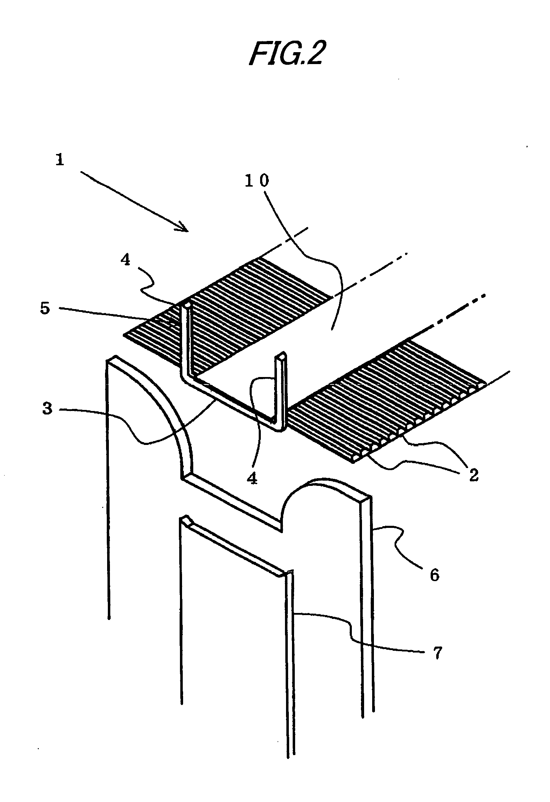

Fig.1 shows a connected staple 1 according to a first embodiment of the invention. According to the connected staple 1 of the embodiment, a number of staple members 2 in a straight shape before being formed into a C-shape are aligned to be connected and wound in a roll-like shape, and made to be able to be charged to a stapler or the like by being contained in a cartridge or a refill. As shown by Fig.2, the staple member 2 in the straight shape is successively supplied to a strike out portion at inside of the stapler and formed in a C-shape by a forming mechanism 6 formed immediately before the strike out portion, a crown portion 3 is formed at a center portion of the staple member 2 in the straight shape and leg portions 4 folded to bend vertically are formed at both end portions thereof. Further, a staple 5 formed in the C-shape is struck out to sheets to be bound by the driver mechanism 7 formed in correspondence with the strike out portion to thereby bind the sheets to be bound.

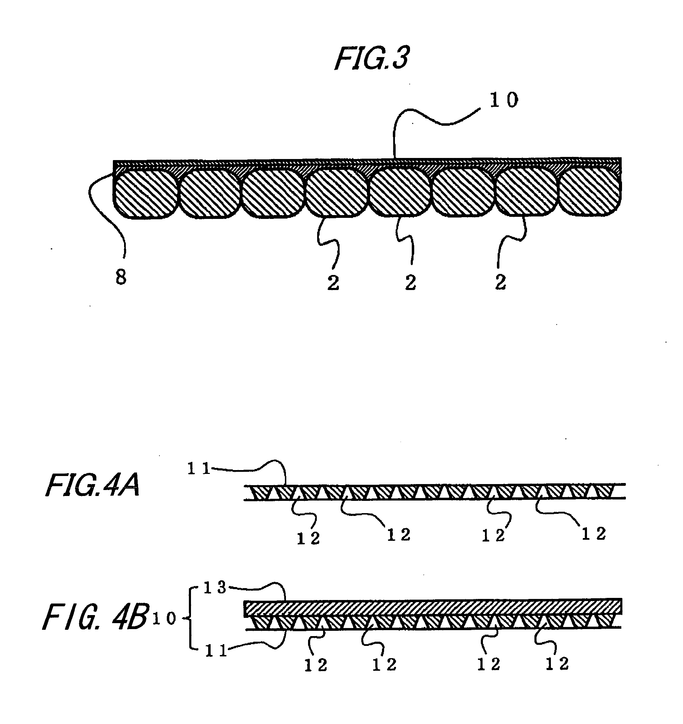

As shown by Fig.3, according to the staple member 2 in the straight shape, a number of the staple members 2 are aligned in parallel to be arranged such that contiguous one of the staple members 2 are brought into contact with each other, and the contiguous staple members 2 are connected by an adhering agent 8 by coating the adhering agent 8 to among the contiguous staple members 2 . There is selected the adhering agent 8 capable of holding a flexibility even after having been hardened to be able to be wound in a coil-like shape. However, the staple members 2 cannot be connected by a sufficient connecting strength only by the adhering agent 8. Therefore, the long tearable film 10 is pasted along a direction of aligning the staple members 2 from one side faces of the staple members 2 connected by the adhering agent 8 in this way. The connected staple connected to be long to be able to be wound in the coil-like shape are formed by the tearable film 10.

The tearable film 10 connected to the one face of the staple members 2 connected in the parallelly aligned state is made to be able to be cut easily between the contiguous staple members 2 when a front one of the staple member 2 of the connected staple 1 is formed into the C-shape and struck out to the sheets to be bound such that the front staple member 2 can be separated easily from a succeeding portion of the connected staple 1. Such a tearable film 10 is formed by forming the porous film 11 by forming a number of the through holes 12 having an average opening diameter of 20 µm by a density of 10000 holes/cm² at a long dual axes elongating polypropylene (OPP) film having a thickness of 20 µm <first polymer film> as shown by Fig.4A and laminating a low density polyethylene (LLDPE) film 13 <second polymer film> having a thickness of 40 µm to one face of the porous film 11 by an extrusion laminating method as shown by Fig. 4B .

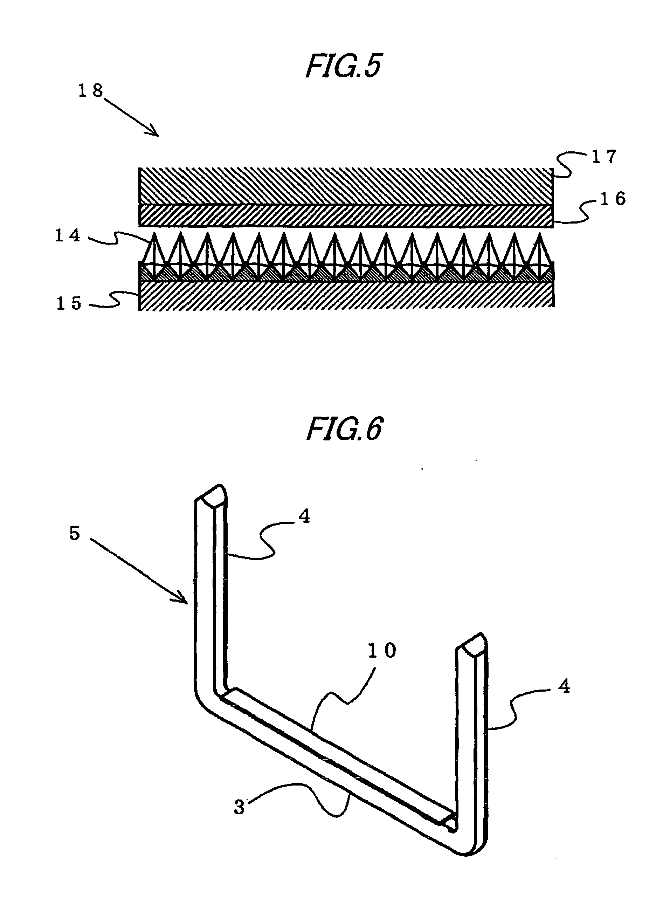

In fabricating the porous film 11, for example, as shown by Fig.5, the porous film 11 can be formed such that an interval of two rollers 15, 17 of a roller mechanism 18 arranged with the pair of rollers opposedly in parallel with each other comprising a first roller 15 formed by projecting a number of synthetic diamond particles 14 having a particle size of 40 through 50 µm at an outer surface thereof and a second roller 17 formed with a urethane rubber sheet 16 at a surface thereof such that a chip of the synthetic diamond particle 14 of the first roller 15 is brought into contact with a face of the urethane rubber sheet 16 of the second roller and by inserting the OPP film to between the rollers 15, 17 rotated in directions reverse to each other, sharp edges of the synthetic diamond particles 14 bite the OPP film to form a number of the through holes 12 at the OPP film. The tearable film 10 is formed by laminating the LLDPE film 13 on one face side of the porous film 11 formed in this way.

When the staple member 2 is formed in the C-shape, as shown by Fig.6, the tearable film 10 is adhered to be arranged at a portion of the staple 5 in the C-shape constituting an inner side of the crown portion 3. In adhering the tearable film 10 and the staple member 2, the tearable film 10 and the staple member 2 may be adhered by heating to melt a layer of the low density polyethylene (LLDPE) film 13 constituting the tearable film 10, ormaybe connected by also using other adhering agent. The tearable film 10 is adhered only to the center portion of the crown portion 3 which does not constitute the leg portion 4 of the staple 5 at least formed into the C-shape, it is preferable that a width of the tearable film 10 is as narrow as possible.

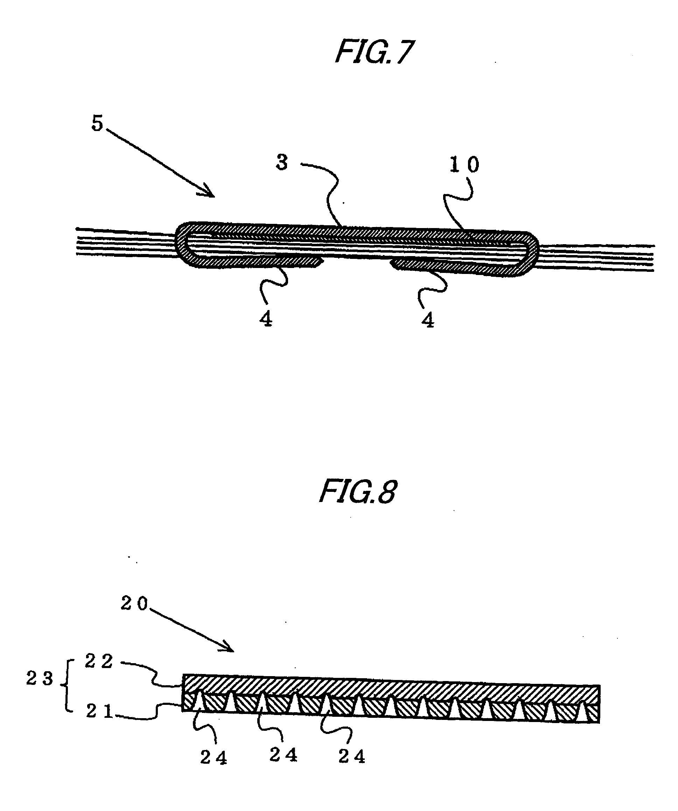

The connected staple 1 connected by the tearable film 10 as described above is supplied successively to the strike out portion, formed into the C-shape by the forming mechanism 6 and thereafter, is struck to the sheets to be bound by the driver mechanism 7, at this occasion, the staple 5 formed in the C-shape is separated from a second one of the staple member 2 by receiving shearing operation between the staple 5 and the succeeding portion of the staples 1. At this occasion, the through hole 12 formed at the porous film 11 of the tearable film 10 is operated as an onset of separation, a number of the through holes 12 are formed along the staple members contiguous to each other and therefore, the through holes 12 are operated successively as separating points. As a result, the tearable film 10 can extremely easily be pulled to be broken between the contiguous staple members 2 in a direction inparallel with the staple members 2. At this occasion, there is not formed a break piece extended to be long in a string-like shape at a portion of breaking the dual axes elongating polypropylene (OPP) film and a clean cut face is formed. Thereby, as shown by Fig.7, the tearable film separated along the staple member is pinched between a lower face of the crown portion of the staple subjected to staple binding and the sheets to be bound to be made to be inconspicuous from an outer side.

Further, although the dual axes elongating polypropylene (OPP) film is used as the material of forming the porous film 11 according to the above-described embodiment, inplace thereof, a long nylon film having a thickness of 15 µm can be used as the material of the porous film 11. Further, although according to the above-described embodiment, the porous film 11 is formed by forming the through hole 12 at the OPP film, by setting a distance between the tip of the synthetic diameter particle 14 of the roller mechanism 18 and the surface of the urethane rubber sheet 16 to be smaller than the thickness of the OPP film or the nylon film and inserting the OPP film or the nylon film to the roller mechanism 18, the porous film 11 may be formed by forming a number of unpenetrated holes at the OPP film or the nylon film.

Further, it is preferable that the average opening diameter of the through hole 12 or the unpenetrated hole of the porous film 11 is 0. 5 through 100 µm. When the average opening diameter is less than 0.5 µm, it is difficult to firmly and easily pull to break the film in a direction constituting an object at an arbitrary portion. On the other hand, when the avarage opening diameter exceeds 100 µm, it is difficult to ensure a pertinent strength of the film. Further, it is preferable that a density of forming the through hole 12 or the unpenetrated hole to be equal to or larger than 1000 holes/cm². When the density is less than 1000 holes/cm², it is difficult to firmly and easily pull to break the film in a direction constituting an object at an arbitrary portion.

By setting the average opening diameter of the through hole 12 or the unpenetrated hole of the porous film 11 as described above, and setting the density of forming the through hole 12 or the unpenetrated hole as described above, when the front staple member 2 is separated, the tearable film 10 can firmly and easily be separated along the longitudinal direction of the staple member 2 between the staple members 2. Further, it is preferable that the porous film 11 formed with the through hole 12 or the unpenetrated hole is provided with a thickness equal to or larger than 6 µm from a view point of providing tearable performance. Further, in place of the low density polyethylene (LLDPE), for example, a themally melting polymer film of nonoriented polyethylene, ethylvinyl acetate copolymer (EVA) film, polypropylene film or the like can be used.

### <Second embodiment>

Fig.8 shows a tearable film 20 according to a second embodiment of the invention. The tearable film 20 according to the embodiment pasted to one face of the staple member 2 forming the connected staple 11 is structured by previously fabricating a long laminated film 23 by laminating an LLDPE film 22 <second polymer film> having a thickness of 40 µm on an OPP film 21 <first polymer film> having a thickness of 20 µm by extrusion laminating method and forming a number of unpenetrated holes 24 having an average opening diameter 40 µm reaching a center of a layer of the LLDPE film 22 from a side of a layer of the OPP film 21 of the laminated film 23 at a density of 10000 holes/cm².

According to the tearable film 20 of the embodiment, similar to the above-described embodiment, the tearable film 20 is fabricated such that a distance between the synthetic diamond particle 14 and the urethane sheet 16 of the roller mechanism 18 structured by a pair of roller of the first roller 15 formed by projecting the synthetic diamond particle 14 at the outer surface and the second roller 17 formed with the urethane rubber sheet 16 at the surface is set to be larger than the thickness of the OPP film 21 and smaller than the laminated film 23, the laminated film 23 is inserted to between the pair of rollers, thereby, a number of unpenetrated holes 19 having an average opening diameter of 40 µm penetrated through the OPP film layer 21 of the laminated film 23 and reaching a center of the LLDPE film layer 22 are formed at a density of 10000 holes/cm².

According to the connected staple 1 adhered with the tearable film 20 according to the above-described embodiment, the unpenetrated hole 24 is formed also at the LLDLPE film 22 particularly having a property of being difficult to be broken in any direction and therefore, tearable performance of the LLDPE film 22 can significantly be promoted, when the front staple is separated from the succeeding portion of the connected staple, the tearable film 20 can extremely easily be pulled to be broken in a direction in parallel with the staple member 2 between the contiguous staple members 2. Further, at this occasion, there is not formed a break piece extended to be long in a string-shape at a breaking portion of the OPP film 21 and a clean cut face can be formed.

### Industrial Applicability:

The invention is applicable also to the connected staple 1 connected with the staple members 2 in the straight shape to be mounted to an electric stapler or the like included in a copier or the like, or connected staple connected with staples formed in the C-shape to be used in a manual stapler and an increase in power consumption of power for driving to strike the staple or an increase in an occupied space of the electric stapler or the manual stapler can be resolved.

## Claims

1. A connected staple comprising:
a number of staple members aligned in parallel; and
a tearable film,
wherein the number of staple members are connected by adhering with the tearable film,
the tearable film is structured by laminating a first polymer film and a second polymer film, and
the tearable film is provided with unpenetrated holes formed over an entire face of the tearable film.

2. The connected staple according to claim 1, wherein an average opening diameter of the unpenetrated hole is 0.5 through 100 µm and the unpenetrated holes are formed at the tearable film at a density equal to or larger than 1000 pieces/cm².

3. The connected staple according to claim 1, wherein the unpenetrated hole is structured by a hole penetrated through or not penetrated through the first polymer film.

4. The connected staple according to claim 3, wherein the unpenetrated hole is formed by inserting the first polymer film between a pair of rollers structured by a roller formed with a diamond particle at a surface thereof and a roller formed with urethane rubber at a surface thereof by a plurality of times by changing an inserting direction.

5. The connected staple according to claim 1, wherein the unpenetrated hole comprises a hole formed by penetrating through the first polymer film and reaching the second polymer film.

6. The connected staple according to claim 5, wherein the unpenetrated hole is formed by inserting a laminated film laminated with the first polymer film and the second film to between a pair of rollers structured by a roller formed with a diamond particle at a surface thereof and a roller formed with urethane rubber at a surface thereof by a plurality of times by changing an inserting direction.

7. The connected staple according to claim 1, wherein the first polymer film is a film comprising a polymer selected from the groups consisting of polyester, nylon and oriented polypropylene.

8. The connected staple according to claim 1, wherein the second polymer film is a thermally melting polymer film.

9. The connected staple according to claim 1, wherein the staple member is an unformed staple in a straight shape, and
the tearable film is adhered to a center portion of a staple member which does not constitute a leg after the staple member is formed.

10. The connected staple according to claim 1, wherein the tearable film is adhered to be arranged at a portion constituting an inner side of a crown portion of a staple in a C-shape when the staple is formed in the C-shape.
